# FASCICULE DE BREVET EUROPEEN

(11) **EP 3 755 938 B1**
(45) Date de publication et mention de la délivrance du brevet: **22.12.2021**
(21) Numéro de dépôt: 19742411.2
(22) Date de dépôt: 06.02.2019
(51) Int. Cl.: F17C 11/00, C01B 3/00

(54) **RESERVOIR POLYMORPHE**
POLYMORPHES RESERVOIR
POLYMORPHOUS RESERVOIR

(30) Priorité: 19.02.2018 FR 1870174
(43) Date de publication de la demande: 30.12.2020
(73) Titulaire: Mahytec, 39100 Dole (FR)
(72) Inventeur: ROBINET, Pascal, 25000 Besançon (FR); PERREUX, Dominique, 25480 Pirey (FR); THIEBAUD Frédéric, 25660 Fontain (FR)
(74) Mandataire: Oudin, Stéphane
(86) Numéro de dépôt international: PCT/FR2019/000017
(87) Numéro de publication internationale: WO 2019/158831

(56) Documents cités:
- EP-A2- 0 188 996
- WO-A1-2016/019316
- WO-A2-2013/087565

## Description

### Domaine technique

La présente invention concerne le domaine des réservoirs d'hydrogène à hydrure de stockage d'hydrogène et plus particulièrement des réservoirs pour d'un liner polymère renforcé par un ou des matériaux permettant de résister aux efforts de pression.

### Technique antérieure

Dans le cadre de la recherche de sources d'énergie alternatives aux énergies fossiles, certains gaz et en particulier l'hydrogène, non polluant et dont le pouvoir calorifique est élevé, s'annonce être un vecteur d'énergie particulièrement prometteur.

De manière classique, en vue de sa mise à disposition ultérieure comme vecteur énergétique, l'hydrogène est soit stocké comprimé dans un réservoir le plus souvent cylindrique, soit stocké sous forme solide ou encore sous forme liquide.

La présente invention concerne le deuxième mode de stockage de l'hydrogène dans lequel l'hydrogène est stocké par absorption, à des température et pression données, dans des composés solides tels que de l'hydrure métallique sous forme de poudre. L'hydrogène est ensuite restitué, par exemple, en modifiant les conditions de température et/ou pression.

Ladite poudre d'hydrure métallique est de manière classique stockée dans des réservoirs comportant généralement une enveloppe rigide métallique. Les réservoirs de ce type sont intéressants car ils sont suffisamment résistants pour garantir un stockage de la poudre d'hydrure métallique en toute sécurité.

De tels réservoirs sont déjà décrits dans la demande de brevet internationale WO 2013/087565 et dans la demande de brevet européenne EP 0 188 996. Ces dernières divulguent respectivement un réservoir métallique pour le stockage d'hydrure métallique constitué de deux parties reliées au niveau d'une zone d'assemblage et contenant chacune un liner, des espaces pour le stockage de l'hydrogène, des échangeurs de chaleurs, et un réservoir métallique pressurisé constitué de plusieurs liners aux parois amovibles, d'un tube filtrant au centre et permettant le stockage d'hydrure métallique.

Toutefois, les réservoirs de ce type sont trop rigides pour pouvoir s'adapter facilement aux formes complexes des supports qui les reçoivent ainsi qu'à leurs éventuels mouvements, afin de favoriser les échanges thermiques sans gêner lesdits mouvements.

### Exposé de l'invention

Le but de la présente invention est donc de pallier les inconvénients précédemment cités en proposant un réservoir de stockage d'hydrure métallique en poudre ayant une conception combinant un poids modéré pour des performances de résistance mécanique et de souplesse importantes et durables, ledit réservoir étant particulièrement adapté à une utilisation nomade.

A cet égard, la présente invention a pour objet un réservoir déformable de stockage d'hydrogène sous forme solide contenant au moins un composé capable d'absorber ou de libérer de l'hydrogène, le réservoir étant remarquable en ce qu'il comporte au moins :
- deux barrettes rigides comportant chacune un liner en polymère comportant au moins un premier orifice et déterminant au moins un compartiment de stockage dudit composé et une structure de renfort à l'intérieur de laquelle est logé ledit liner, ladite structure de renfort étant en forme globale de cylindre creux et fermée à chacune des extrémités longitudinales respectivement par un flasque de fermeture, et comportant au moins un orifice,
- un raccord fixé sur la structure de renfort d'au moins une des barrettes en étant inséré simultanément dans le premier orifice du liner et l'orifice de la structure de renfort, de sorte à être solidarisé de façon étanche par apport au liner et à mettre en relation l'intérieur du compartiment de stockage avec l'extérieur dudit réservoir de stockage,
- un organe de jonction souple liant entre elles deux barrettes adjacentes de sorte à rendre l'ensemble du réservoir de stockage déformable malgré la rigidité de chaque barrette.

De manière avantageuse, le liner comporte au moins une cloison interne de sorte à déterminer au moins deux compartiments de stockage dudit composé, chaque cloison interne comportant un orifice les traversant de part en part et permettant de mettre en relation deux compartiments de stockage adjacents.

De préférence, le liner comporte un deuxième orifice aménagé sur l'une de ses faces en regard de l'un des flasques et au droit de chaque cloison interne de sorte à déboucher dans les deux compartiments de stockage situés de part et d'autre de ladite cloison interne et le réservoir comporte un clip de filtration apte à être mis en place, au travers dudit deuxième orifice, sur la cloison interne du liner.

Selon un mode réalisation préféré, ledit clip de filtration est en forme générale de U et comporte deux ailes parallèles entre elles et une âme reliant les deux ailes, chacune des deux ailes étant munie d'un orifice traversant disposé de manière à être en vis-à-vis de l'orifice de la cloison interne lorsque que le clip est mis en place sur cette dernière, et le clip est muni d'un filtre fixé sur l'une de ses ailes au droit de son orifice pour interdire tout passage du composé.

Chaque deuxième orifice du liner est avantageusement associé à un lamage aménagé sur ledit liner du côté opposé à la cloison interne associée et le réservoir comporte un organe d'étanchéité disposé dans ledit lamage et comprimé entre le flasque associé et l'ensemble clip - liner.

Les flasques de fermeture sont de préférence des plaques munies chacune d'une rainure aptes à recevoir les extrémités longitudinales de la structure de renfort.

Le liner est avantageusement réalisé en matériau polymère renforcé par impression en trois dimensions.

De même, chaque organe de jonction est réalisé en polymère renforcé ou en matériau composite ou en métal ou encore en alliage de métaux légers, l'organe de jonction en polymère renforcé étant de préférence réalisé en même temps que les liners par impression en trois dimensions.

De manière avantageuse, les flasques de fermeture sont métalliques, de préférence réalisés en alliage d'aluminium, et la structure de renfort est réalisée en matériau composite.

### Description sommaire des figures

D'autres avantages et caractéristiques ressortiront mieux de la description qui va suivre, d'un exemple particulier de réalisation, donné à titre d'illustration non limitative, d'un réservoir de stockage d'hydrure métallique en poudre conforme à l'invention, en référence aux figures annexées sur lesquelles :
- la figure 1 est une vue en perspective d'un réservoir de stockage d'hydrogène sous forme solide selon l'invention ;
- la figure 2 est une vue de côté d'une des barrettes du réservoir de la figure 1 ;
- la figure 3 est une vue en coupe longitudinale de la barrette de la figure 2 ;
- la figure 4 est une vue de détail agrandie de l'extrémité de la barrette de la figure 2 ;
- la figure 5 est une vue de détail agrandie de la barrette de la figure 2 ;
- la figure 6 est une vue en coupe longitudinale du liner de la barrette de la figure 2 ;
- la figure 7 est une vue de détail agrandie d'un clip de la barrette de la figure 2.

### Meilleure manière de réaliser l'invention technique

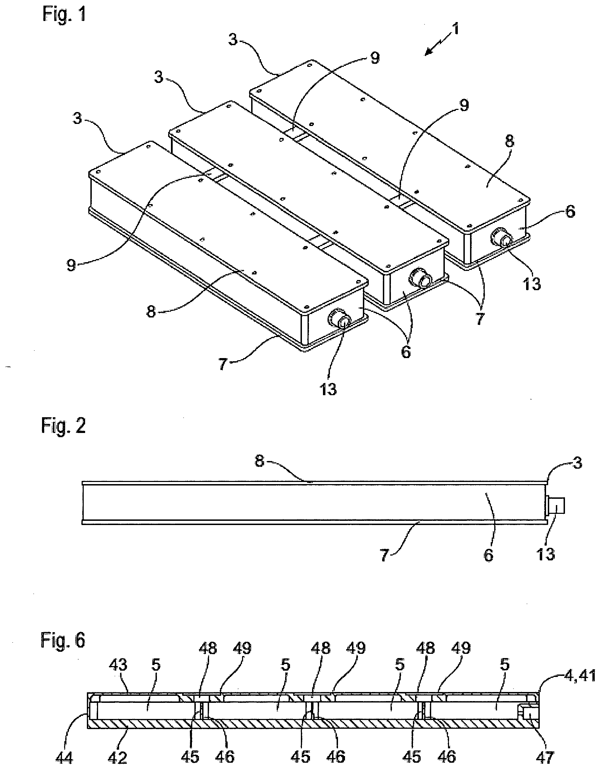

En référence aux figures 1 à 7 et conformément à l'invention, on a représenté un réservoir 1 déformable de stockage d'hydrogène sous forme solide contenant au moins un composé 2 capable d'absorber ou de libérer de l'hydrogène, tels que par exemple de l'hydrure métallique en poudre, ledit réservoir 1 comportant au moins deux éléments 3 rigides forme globalement parallélépipédique aplati, nommés ci-après barrette, et comportant chacun un liner 4 déterminant au moins un compartiment de stockage 5 dudit composé 2 et logé à l'intérieur d'une structure de renfort 6 en forme globale de cylindre creux, et un flasque de fermeture 7,8 fixé, de manière sensiblement étanche, à chacune des extrémités longitudinales de ladite structure de renfort 6.

Chaque barrette 3 est solidarisée avec la barrette 3 adjacente par au moins un organe de jonction 9 souple de sorte à rendre l'ensemble du réservoir 1 de stockage déformable malgré la rigidité de chaque barrette 3.

On désigne ici par "cylindre" une surface définie par une droite de direction constante se déplaçant le long d'une courbe fermée de toute forme et pas uniquement circulaire.

Dans l'exemple de réalisation représenté sur les figures 1, 3 et 6, le réservoir 1 de stockage comprend trois barrettes 3 disposées les unes à la suite des autres et comprenant chacune un liner 4 déterminant quatre compartiments de stockage 5 également disposés les unes à la suite des autres.

Toutefois, il va de soi que le nombre et la disposition des barrettes 3 et/ou des compartiments de stockage 5 pourront varier, sans sortir du cadre de la présente invention.

En référence à la figure 6, le liner 4 comprend un corps 41 creux globalement parallélépipédique comportant une face inférieure 42, une face supérieure 43 et une face périphérique 44 rejoignant lesdites faces inférieure et supérieure 42,43 quatre compartiments de stockage 5 disposés les unes à la suite des autres et séparés par une cloison interne 45.

Le corps 41 du liner 4 comporte trois cloisons internes 45 s'étendant à l'intérieur dudit corps 41 perpendiculairement aux faces inférieure 42, supérieure 43 et périphérique 44, lesdites cloisons internes 45 déterminant à l'intérieur dudit corps 41 les quatre compartiments de stockage 5 et comprenant chacune un orifice 46 les traversant de part en part et permettant de mettre en relation deux compartiments de stockage 5 adjacents.

En outre, le corps 41 du liner 4 comprend au moins un premier orifice 47 aménagé sur sa face périphérique 44 et mettant en relation l'intérieur dudit corps 41 et l'extérieur de ce dernier.

Par ailleurs, la face supérieur 43 du corps 41 du liner 4 comporte un deuxième orifice 48 aménagé au droit de chaque cloison interne 45 et débouchant dans les deux compartiments de stockage 5 situés de part et d'autre de ladite cloison interne 45. Chaque deuxième orifice 48 est associé à un lamage 49 aménagé sur ladite face supérieur 43 du liner 4 du côté opposé à la cloison interne 45 associée.

Pour des raisons évidentes d'étanchéité, le liner 4 est avantageusement réalisé en matériau polymère renforcé par impression en trois dimensions.

Par ailleurs, un liner 4 en polymère sera plus facilement déformable et s'adaptera plus facilement à la structure rigide de chaque barrette 3 du réservoir 1 de stockage selon l'invention.

Cette configuration d'un réservoir 1 de stockage avec au moins une barrette 3 déterminant plusieurs compartiments de stockage 5 est intéressante car elle permet de garantir un échange thermique maximal avec le composé 2 en évitant que l'ensemble dudit composé 2 ne s'accumule à l'une des extrémités de la barrette 3 lors d'un mouvement du réservoir 1 de stockage selon l'invention.

En revanche, on comprend bien que la présence de plusieurs compartiments de stockage 5 dans chaque liner 4 n'est pas une condition indispensable à la déformabilité du réservoir 1 de stockage selon l'invention, puisque que chaque barrette 3 est rigide du fait de sa structure de renfort 6 et ses flasques de fermeture 7,8.

En référence aux figures 1, 3 et 4, la structure de renfort 6 en forme globale de cylindre creux comporte un orifice 61 aménagé au droit du premier orifice 47 du liner 4 lorsqu'il est mis en place dans la structure de renfort 6 et mettant en relation l'intérieur de ladite structure de renfort 6 et l'extérieur de cette dernière.

Pour des raisons de résistance mécanique et de légèreté, la structure de renfort 6 est réalisée de préférence en matériau composite.

En référence aux figures 1, 3 et 4, les flasques de fermeture 7,8 sont des plaques munies chacune d'une rainure 71,81 aptes à recevoir les extrémités longitudinales 62,63 de la structure de renfort 6 afin de permettre l'assemblage de cette dernière avec les flasques de fermeture 7,8. Le maintien en position de cet assemblage est réalisé à l'aide de tout moyen adapté tel que, par exemple, des boulons exerçant un effort de serrage tendant à serrer les flasques de fermeture 7,8 contre la structure de renfort 6.

Pour des raisons évidentes de résistance mécanique et de légèreté, les flasques de fermeture 7,8 sont avantageusement métalliques et de préférence réalisés en alliage d'aluminium.

En référence à la figure 1, le réservoir 1 de stockage comprend deux organes de jonction 9 souples reliant deux barrettes 3 adjacentes. Chaque organe de jonction 9 est de préférence en forme générale de languette et est fixé par chacune de ses extrémités aux deux barrettes 3 adjacentes. Chaque organe de jonction est souple pour permettre au réservoir 1 de stockage de se déformer pour s'adapter au support qu'il le reçoit, en autorisant un déplacement relatif des barrettes 3 les unes par rapport aux autres. Pour cela, chaque organe de jonction 9 est réalisé en polymère renforcé, en matériau composite ou encore en métal ou alliage de métaux légers. Dans l'hypothèse où les organes de jonction 9 sont réalisés en polymère renforcé, ces derniers pourront être réalisés en même temps que les liners 4 de préférence par impression en trois dimensions.

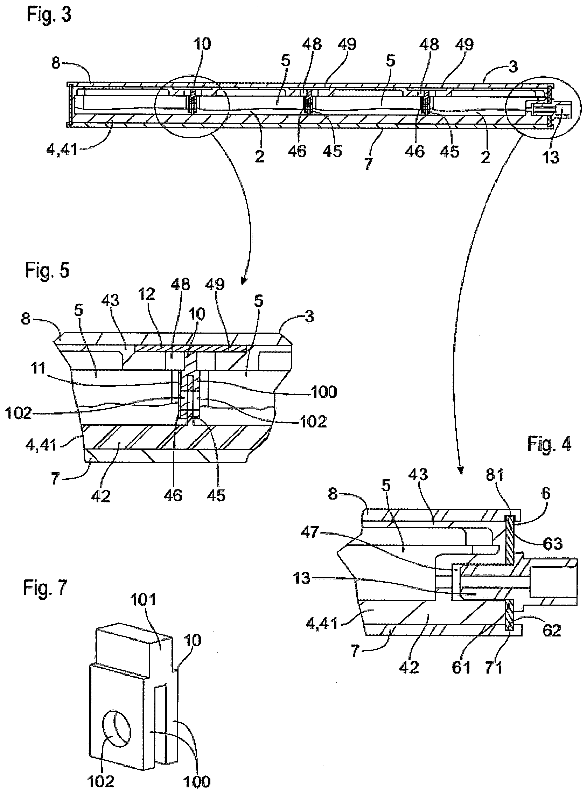

En référence aux figures 3, 5 et 7, lorsque le liner 4 définit plusieurs compartiments de stockage 5 et comporte au moins une cloison interne 45, le réservoir 1 de stockage comporte au moins un clip 10 de filtration en forme générale de U et comporte deux ailes 100 parallèles entre elles et une âme 101 reliant les deux ailes 100. Ledit clip 10 est apte à être mis en place sur la partie supérieure de la cloison interne 45 par le deuxième orifice 48 associé, ladite partie supérieure de la cloison interne 45 étant alors insérée entre les deux ailes 100 dudit clip 10 et en appui contre l'aile 101 du clip 10.

Selon un autre mode réalisation, le clip 10 sera être mis en place sur la partie inférieure de la cloison interne 45, le deuxième orifice 48 devra alors être aménagé sur la face inférieure 42 du liner 4.

Chacune des deux ailes 100 est en outre munie d'un orifice 102 traversant disposé de manière à être en vis-à-vis de l'orifice 46 de la cloison interne 45 lorsque que le clip 10 est mis en place sur la partie supérieure de cette dernière, afin de permettre le passage de l'hydrogène d'un comportement de stockage 5 à l'autre.

Toutefois, pour s'assurer que seul l'hydrogène passe d'un comportement de stockage 5 à l'autre, chaque clip 10 de filtration est muni d'un filtre 11 fixé sur l'une de ses ailes 100 au droit de l'orifice 102 pour interdire tout passage du composé 2.

Dans cette même hypothèse, pour garantir l'étanchéité au droit du clip 10 et de le deuxième orifice 48 du liner 4, le réservoir 1 de stockage selon l'invention comprend en outre un organe d'étanchéité 12 disposé dans le lamage 49 associé du liner 4 et comprimé entre le flasque 8 et l'ensemble clip 10 - liner 4.

Enfin, en référence aux figures 1, 3 et 4, le réservoir 1 de stockage comprend un raccord 13 fixé sur la structure de renfort 6 en étant inséré simultanément dans l'orifice 61 de cette dernière et dans le pr.emier orifice 47 du liner 4 de sorte à être solidarisé de façon étanche par apport au liner 4 et à mettre en relation l'intérieur du liner 4, plus particulièrement le compartiment de stockage 5, avec l'extérieur dudit réservoir 1 de stockage, afin de permettre d'une part, le remplissage du réservoir 1 de stockage en composé 2 et la sortie de l'hydrogène libéré. Ce raccord 13 est destiné à être raccordé à une vanne, non représentée, de sorte à limiter les entrées ou sorties dudit réservoir 1 de stockage.

Il va de soi que le raccord 13 pourra également être fixé sur l'un des flasques 7,8, sans sortir du cadre de la présente invention.

Dans l'exemple de réalisation représenté sur les figures 1 à 7, chaque barrette 3 est munie d'un raccord 13. Toutefois, afin de limiter le nombre de vanne à mettre en œuvre, le réservoir 1 de stockage pourra ne comporter qu'une seule barrette 3 avec un raccord 13, sans sortir du cadre de la présente invention. Dans cette hypothèse, chaque barrette 3 sera alors pourvue de plusieurs orifices 61 sur sa structure de renfort 6 et de plusieurs premiers orifices 47 sur son liner 4, au moins un ensemble "orifice 61 de la structure de renfort 6 - premier orifice 47 du liner 4" étant disposé en vis-à-vis d'un ensemble "orifice 61 de la structure de renfort 6 - premier orifice 47 du liner 4" d'une barrette 3 adjacente semblable, lesdits deux ensembles "orifice 61 de la structure de renfort 6 - premier orifice 47 du liner 4" étant alors reliés de façon étanche par une tuyauterie, non représentée, mettant en relation les intérieurs respectifs des liners 4 des deux barrettes 3 adjacentes, chaque tuyauterie et lesdits deux ensembles orifice 61 - premier orifice 47 associés étant de préférence disposés au droit d'un organe de jonction 9.

### Possibilité d'application industrielle

On comprend bien que le réservoir 1 de stockage conforme à l'invention est de préférence utilisé pour stocker de l'hydrogène sous forme solide. Toutefois, il est évident que le réservoir 1 peut être adapté et utilisé pour contenir d'autres types de gaz sous forme solide.

Enfin, il va de soi que les exemples de réservoirs 1 de stockage conformes à l'invention qui viennent d'être décrits ne sont que des illustrations particulières, en aucun cas limitatives de l'invention.

## Revendications

1. Réservoir (1) déformable de stockage d'hydrogène sous forme solide contenant au moins un composé (2) capable d'absorber ou de libérer de l'hydrogène, le réservoir (1) étant **caractérisé en ce qu'**il comporte au moins :
- deux barrettes (3) rigides comportant chacune un liner (4) en polymère comportant au moins un premier orifice (47) et déterminant au moins un compartiment de stockage (5) dudit composé (2) et une structure de renfort (6) à l'intérieur de laquelle est logé ledit liner (4), ladite structure de renfort (6) étant en forme globale de cylindre creux et fermée à chacune des extrémités longitudinales (62,63) respectivement par un flasque de fermeture (7,8), et comportant au moins un orifice (61),
- un raccord (13) fixé sur la structure de renfort (6) d'au moins une des barrettes (3) en étant inséré simultanément dans le premier orifice (47) du liner (4) et l'orifice (61) de la structure de renfort (6), de sorte à être solidarisé de façon étanche par apport au liner (4) et à mettre en relation l'intérieur du compartiment de stockage (5) avec l'extérieur dudit réservoir (1) de stockage,
- un organe de jonction (9) souple liant entre elles deux barrettes (3) adjacentes de sorte à rendre l'ensemble du réservoir (1) de stockage déformable malgré la rigidité de chaque barrette (3).

2. Réservoir (1) selon la revendication 1 **caractérisé en ce que** le liner (4) comporte au moins une cloison interne (45) de sorte déterminer au moins deux compartiments de stockage (5) dudit composé (2), chaque cloison interne (45) comportant un orifice (46) les traversant de part en part et permettant de mettre en relation deux compartiments de stockage (5) adjacents.

3. Réservoir (1) selon la revendication 2, **caractérisé en ce que** le liner (4) comporte un deuxième orifice (48) aménagé sur l'une de ses faces en regard de l'un des flasques (7,8) et au droit de chaque cloison interne (45) de sorte à déboucher dans les deux compartiments de stockage (5) situés de part et d'autre de ladite cloison interne (45) et **en ce qu'**il comporte un clip (10) de filtration apte à être mis en place, au travers dudit deuxième orifice (48), sur la cloison interne (45) du liner (4).

4. Réservoir (1) selon la revendication 3, **caractérisé en ce que** ledit clip (10) de filtration est en forme générale de U et comporte deux ailes (100) parallèles entre elles et une âme (101) reliant les deux ailes (100), chacune des deux ailes (100) étant munie d'un orifice (102) traversant disposé de manière à être en vis-à-vis de l'orifice (46) de la cloison interne (45) lorsque que le clip (10) est mis en place sur cette dernière, et **en ce que** le clip (10) est muni d'un filtre (11) fixé sur l'une de ses ailes (100) au droit de son orifice (102) pour interdire tout passage du composé (2) .

5. Réservoir (1) selon l'une quelconque des revendications 3 ou 4, **caractérisé en ce que** chaque deuxième orifice (48) du liner (4) est associé à un lamage (49) aménagé sur dudit liner (4) du côté opposé à la cloison interne (45) associée et **en ce qu'**il comporte un organe d'étanchéité (12) disposé dans ledit lamage (49) et comprimé entre le flasque (7 ou 8) associé et l'ensemble clip (10) - liner (4).

6. Réservoir (1) selon l'une quelconque des revendications 1 à 5 **caractérisé en ce que** les flasques de fermeture (7,8) sont des plaques munies chacune d'une rainure (71,81) aptes à recevoir les extrémités longitudinales (62,63) de la structure de renfort (6).

7. Réservoir (1) selon l'une quelconque des revendications 1 à 6 **caractérisé en ce que** le liner (4) est réalisé en matériau polymère renforcé par impression en trois dimensions.

8. Réservoir (1) selon l'une quelconque des revendications 1 à 7 **caractérisé en ce que** chaque organe de jonction (9) est réalisé en polymère renforcé ou en matériau composite ou en métal ou encore en alliage de métaux légers, l'organe de jonction (9) en polymère renforcé étant de préférence réalisé en même temps que les liners (4) par impression en trois dimensions.

9. Réservoir (1) selon l'une quelconque des revendications 1 à 8 **caractérisé en ce que** les flasques de fermeture (7,8) sont métalliques, de préférence réalisés en alliage d'aluminium, et **en ce que** la structure de renfort (6) est réalisée en matériau composite.

## Patentansprüche

1. Verformbarer Tank (1) zum Speichern von Wasserstoff in fester Form, der mindestens eine Verbindung (2) enthält, die in der Lage ist, Wasserstoff zu absorbieren oder freizugeben, wobei der Tank (1) **dadurch gekennzeichnet ist, dass** er mindestens Folgendes beinhaltet:
- zwei starre Stege (3), die jeweils einen Liner (4) aus Polymer beinhalten, der mindestens eine erste Öffnung (47) beinhaltet, und mindestens ein Speicherfach (5) für die Verbindung (2) und eine Verstärkungsstruktur (6) bestimmt, in deren Inneren der Liner (4) aufgenommen ist, wobei die Verstärkungsstruktur (6) in einer allgemeinen Form eines Hohlzylinders und an jedem der Längsenden (62, 63) jeweils durch einen Verschlussflansch (7, 8) verschlossen ist, und mindestens eine Öffnung (61) beinhaltet,
- einen Anschluss (13), der an der Verstärkungsstruktur (6) mindestens eines der Stege (3) fixiert ist, indem er gleichzeitig in die erste Öffnung (47) des Liners (4) und die Öffnung (61) der Verstärkungsstruktur (6) eingeführt ist, um in dichter Form in Bezug auf den Liner (4) fest verbunden zu sein, und das Innere des Speicherfaches (5) mit dem Äußeren des Tanks (1) zum Speichern in Verbindung zu bringen,
- ein biegsames Verbindungsorgan (9) das zwei benachbarte Stege (3) derart miteinander verbindet, um die Gesamtheit des Tanks (1) zum Speichern trotz der Starrheit eines jeden Stegs (3) biegsam zu machen.

2. Tank (1) nach Anspruch 1, **dadurch gekennzeichnet, dass** der Liner (4) mindestens eine Innenwand (45) beinhaltet, um mindestens zwei Speicherfächer (5) für die Verbindung (2) zu bestimmen, wobei jede Innenwand (45) eine Öffnung (46) beinhaltet, die diese von einer Seite zur anderen durchquert, und es ermöglicht, zwei benachbarte Speicherfächer (5) miteinander in Verbindung zu bringen.

3. Tank (1) nach Anspruch 2, **dadurch gekennzeichnet, dass** der Liner (4) eine zweite Öffnung (48) beinhaltet, die in eine seiner Seiten gegenüber einem der Flansche (7, 8) und auf Höhe jeder Innenwand (45) derart eingearbeitet ist, um in die beiden Speicherfächer (5) zu münden, die sich beiderseits der Innenwand (45) befinden, und dadurch, dass er einen Clip (10) zum Filtern beinhaltet, der imstande ist, durch die zweite Öffnung (48) hindurch, an der Innenwand (45) des Liners (4) angebracht zu werden.

4. Tank (1) nach Anspruch 3, **dadurch gekennzeichnet, dass** der Clip (10) zum Filtern in einer allgemeinen U-Form ist und zwei zueinander parallele Flügel (100) und einen Steg (101) beinhaltet, der die beiden Flügel (100) verbindet, wobei jeder der beiden Flügel (100) mit einer Durchgangsöffnung (102) versehen ist, die derart angeordnet ist, um gegenüber der Öffnung (46) der Innenwand (45) zu sein, wenn der Clip (10) auf letzterer angebracht ist, und dadurch, dass der Clip (10) mit einem Filter (11) versehen ist, der auf einem seiner Flügel (100) auf Höhe seiner Öffnung (102) fixiert ist, um jeden Durchgang der Verbindung (2) zu untersagen.

5. Tank (1) nach einem der Ansprüche 3 oder 4, **dadurch gekennzeichnet, dass** jede zweite Öffnung (48) des Liners (4) einer Senkung (49) zugeordnet ist, die auf dem Liner (4) auf der gegenüberliegenden Seite zur zugeordneten Innenwand (45) eingearbeitet ist, und dadurch, dass er ein Dichtorgan (12) beinhaltet, das in der Senkung (49) angeordnet ist und zwischen dem zugeordneten Flansch (7 oder 8) und der Einheit Clip (10) - Liner (4) komprimiert wird.

6. Tank (1) nach einem der Ansprüche 1 bis 5, **dadurch gekennzeichnet, dass** die Verschlussflansche (7, 8) Platten sind, die jeweils mit einer Nut (71, 81) versehen sind, die imstande sind, die Längsenden (62, 63) der Verstärkungsstruktur (6) aufzunehmen.

7. Tank (1) nach einem der Ansprüche 1 bis 6, **dadurch gekennzeichnet, dass** der Liner (4) aus einem durch dreidimensionalen Druck verstärkten Polymerwerkstoff gefertigt ist.

8. Tank (1) nach einem der Ansprüche 1 bis 7, **dadurch gekennzeichnet, dass** jedes Verbindungsorgan (9) aus verstärktem Polymer oder einem Verbundwerkstoff oder aus Metall, oder aber aus einer Leichtmetalllegierung gefertigt ist, wobei das Verbindungsorgan (9) aus verstärktem Polymer vorzugsweise zur selben Zeit wie die Liner (4) durch dreidimensionalen Druck gefertigt wird.

9. Tank (1) nach einem der Ansprüche 1 bis 8, **dadurch gekennzeichnet, dass** die Verschlussflansche (7, 8) aus Metall sind, vorzugsweise aus Aluminiumlegierung gefertigt sind, und dadurch, dass die Verstärkungsstruktur (6) aus Verbundwerkstoff gefertigt ist.

## Claims

1. Deformable reservoir (1) for storing solid hydrogen, containing at least one compound (2) that can absorb or release hydrogen, the reservoir (1) being **characterised in that** it includes at least:
- two rigid bars (3) each including a polymer liner (4) including at least a first orifice (47) and defining at least one compartment (5) for storing said compound (2) and a reinforcing structure (6) inside which said liner (4) is accommodated, said reinforcing structure (6) having globally the shape of a hollow cylinder closed at each of the longitudinal ends (62,63) thereof respectively by a closing flange (7,8), and including at least one orifice (61),
- a connection (13) attached to the reinforcing structure (6) of at least one of the bars (3) by being inserted simultaneously into the first orifice (47) of the liner (4) and the orifice (61) of the reinforcing structure (6), so as to be sealed to the liner (4) and connect the inside of the storage compartment (5) with the outside of said storage reservoir (1),
- a flexible union member (9) joining two adjacent bars (3) so to render the entire storage reservoir (1) deformable in spite of the rigidity of each bar (3).

2. Reservoir (2) according to claim 1 **characterised in that** the liner (4) includes at least one internal partition (45) so as to define at least two storage compartments (5) of said compound (2), each internal partition (45) including an orifice (46) traversing same from end to end and suitable for connecting two adjacent storage compartments (5).

3. Reservoir (1) according to claim 2, **characterised in that** the liner (4) includes a second orifice (48) provided on one of the faces thereof facing one of the flanges (7,8) and plumb with each internal partition (45) so as to lead into the two storage compartments (5) located on either side of said internal partition (45) and **in that** it includes a filtration clip (10) that can be positioned, via said second orifice (48), on the internal partition (45) of the liner (4).

4. Reservoir (1) according to claim 3, **characterised in that** said filtration clip (10) has a general U shape and includes two mutually parallel wings (100) and a core (101) connecting the two wings (100), each of the two wings (100) being equipped with a through orifice (102) disposed so as to be facing the orifice (46) of the internal partition (45) when the clip (10) is positioned thereon, and **in that** the clip (10) is equipped with a filter (11) attached to one of the wings (100) thereof plumb with the orifice (102) thereof to prevent any passage of the compound (2).

5. Reservoir (1) according to any one of claims 3 or 4, **characterised in that** each second orifice (48) of the liner (4) is associated with a countersink (49) provided on said liner (4) on the opposite side to the associated internal partition (45) and **in that** it includes a sealing member (12) disposed in said countersink (49) and compressed between the associated flange (7 or 8) and the clip (10) - liner (4) assembly.

6. Reservoir (1) according to any one of claims 1 to 5 **characterised in that** the closing flanges (7,8) are plates each equipped with a groove (71,81) that can receive the longitudinal ends (62,63) of the reinforcing structure (6).

7. Reservoir (1) according to any one of claims 1 to 6 **characterised in that** the liner (4) is made of reinforced polymer material by three-dimensional printing.

8. Reservoir (1) according to any one of claims 1 to 7 **characterised in that** each union member (9) is made of reinforced polymer or composite material or metal or indeed light metal alloy, the reinforced polymer union member (9) being preferably made at the same time as the liners (4) by three-dimensional printing.

9. Reservoir (1) according to any one of claims 1 to 8 **characterised in that** the closing flanges (7,8) are metallic, preferably made of aluminium alloy, and **in that** the reinforcing structure (6) is made of composite material.
